Europäisches Patentamt

European Patent Office

Office européen des brevets

(19)

(11) **EP 1 399 896 B1**

(12) **FASCICULE DE BREVET EUROPEEN**

(45) Date de publication et mention de la délivrance du brevet:
**27.04.2005 Bulletin 2005/17**

(21) Numéro de dépôt: **02747515.1**

(22) Date de dépôt: **07.06.2002**

(51) Int Cl.7: **G07F 7/10**, H04L 9/32

(86) Numéro de dépôt international:
**PCT/FR2002/001956**

(87) Numéro de publication internationale:
**WO 2003/001464 (03.01.2003 Gazette 2003/01)**

(54) **PROCEDE CRYPTOGRAPHIQUE POUR LA PROTECTION D'UNE PUCE ELECTRONIQUE CONTRE LA FRAUDE**

KRYPTOGRAPHISCHES VERFAHREN ZUM SCHUTZ EINES ELEKTRONISCHEN CHIPS GEGEN BETRUG

CRYPTOGRAPHIC METHOD OF PROTECTING AN ELECTRONIC CHIP AGAINST FRAUD

(84) Etats contractants désignés:
**AT BE CH CY DE DK ES FI FR GB GR IE IT LI LU MC NL PT SE TR**

(30) Priorité: **26.06.2001 FR 0108586**

(43) Date de publication de la demande:
**24.03.2004 Bulletin 2004/13**

(73) Titulaire: **FRANCE TELECOM**
**75015 Paris (FR)**

(72) Inventeurs:
• **ARDITTI, David**
  **F-92140 Clamart (FR)**
• **BURGER, Jacques**
  **F-14112 Bieville Beauville (FR)**
• **GILBERT, Henri**
  **F-91440 Bures-sur-Yvette (FR)**
• **GIRAULT, Marc**
  **F-14000 Caen (FR)**
• **PAILLES, Jean-Claude**
  **F-14610 Epron (FR)**

(74) Mandataire: **Jeune, Pascale**
  **France Télécom R&D/VAT/PI**
  **38-40, rue du Général-Leclerc**
  **92794 Issy Moulineaux Cedex 9 (FR)**

(56) Documents cités:
**EP-A- 0 565 279       WO-A-97/22093**
**DE-A- 19 622 533      DE-A- 19 737 693**
**FR-A- 2 739 706**

## Description

Domaine de l'invention

La présente invention se rapporte au domaine de la cryptographie. En particulier, l'invention se rapporte à un procédé cryptographique de protection contre la fraude d'une puce électronique dans des transactions entre une application et la puce. L'invention se rapporte en outre à un dispositif à puce électronique permettant la mise en oeuvre d'un procédé cryptographique de protection contre la fraude de la puce électronique.

L'invention trouve une application très avantageuse en ce qu'elle permet de protéger contre la fraude des puces à circuit intégré à logique câblée ou à microprocesseur, notamment les puces qui équipent les cartes prépayées utilisées dans des transactions diverses telles que l'établissement de communications téléphoniques, le paiement d'objets dans un distributeur automatique, la location d'emplacements de stationnement à partir d'un parcmètre, le paiement d'un service comme un transport public ou comme la mise à disposition d'infrastructures (péage, musée, bibliothèque,...).

Description de l'art antérieur

Actuellement, les cartes prépayées sont susceptibles de subir différents types de fraude. Un premier type de fraude consiste à dupliquer sans autorisation la carte, le terme clonage étant souvent utilisé pour caractériser cette opération. Un deuxième type de fraude consiste à modifier les données attachées à une carte, en particulier le montant du crédit inscrit dans la carte. Pour lutter contre ces fraudes il est fait appel à la cryptographie, d'une part pour assurer l'authentification de la carte au moyen d'une authentification et/ou pour assurer l'authentification des données au moyen d'une signature numérique et, d'autre part pour assurer le cas échéant la confidentialité des données au moyen d'un chiffrement. La cryptographie met en jeu deux entités, un vérificateur et un objet à vérifier, et elle peut être soit symétrique, soit asymétrique. Lorsqu'elle est symétrique, les deux entités partagent exactement la même information, en particulier une clé secrète. Lorsqu'elle est asymétrique une des deux entités possède une paire de clés dont l'une est secrète et l'autre est publique ; il n'y a pas de clé secrète partagée. Dans de nombreux systèmes, seule la cryptographie symétrique est mise en oeuvre avec des cartes prépayées, car la cryptographie asymétrique reste lente et coûteuse. Les premiers mécanismes d'authentification développés en cryptographie symétrique consistent à calculer une fois pour toutes un certificat, différent pour chaque carte, à le stocker dans la mémoire de la carte, à le lire à chaque transaction et à le vérifier en interrogeant une application du réseau supportant la transaction où les certificats déjà attribués sont soit stockés soit recalculés. Ces mécanismes assurent une protection insuffisante parce que le certificat peut être espionné, reproduit et rejoué frauduleusement étant donné qu'il est toujours le même pour une carte donnée, permettant ainsi de réaliser un clone de cette carte. Pour lutter contre les clones, les mécanismes d'authentification passifs de cartes sont remplacés par des mécanismes d'authentification actifs qui peuvent en outre assurer l'intégrité des données.

Le principe général des mécanismes d'authentification actifs est le suivant : lors d'une authentification, la puce électronique et l'application calculent un certificat qui est le résultat d'une fonction appliquée à une liste d'arguments déterminée à chaque authentification ; la liste d'arguments pouvant comprendre un aléa, l'aléa étant une donnée déterminée par l'application à chaque authentification, une donnée contenue dans la puce électronique et une clé secrète connue de la puce électronique et de l'application. Lorsque le certificat calculé par la puce électronique est identique au certificat calculé par l'application, la puce électronique est jugée authentique et la transaction entre la puce électronique et l'application est autorisée.

De tels mécanismes d'authentification sont largement connus mais la plupart exigent des capacités de calcul au moins égales à celles dont dispose un microprocesseur. Ces mécanismes conviennent donc aux cartes à microprocesseur, mais rarement aux cartes à logique câblée, lesquelles disposent de moyens de calcul beaucoup plus rudimentaires. La présente invention se rapporte aux mécanismes d'authentification symétriques et actifs qui peuvent être mis en oeuvre dans une carte à logique câblée.

Un premier de ces mécanismes fait l'objet du brevet FR 89 09734. Le procédé décrit consiste à définir une fonction non linéaire, cette fonction étant connue de l'application et implantée dans une puce électronique sous la forme d'un circuit câblé. Un second de ces mécanismes fait l'objet du brevet FR 95 12144. Il s'agit d'un procédé de protection des cartes par authentification active inconditionnellement sûre, basé sur l'utilisation pour un nombre limité d'authentifications d'une fonction linéaire assurant une protection contre le rejeu et une usure contrôlée de la clé secrète.

Chacun des deux mécanismes précédemment cités possède des avantages et des inconvénients spécifiques. En ce qui concerne le premier mécanisme, qui repose sur l'hypothèse (non prouvable dans l'état actuel des connaissances) de la sécurité informatique de la fonction non linéaire utilisée, les très fortes contraintes imposées par les capacités de calculs réduites des puces à logique câblée n'autorisent pas une marge de sécurité aussi large que pour les algorithmes à clé secrète usuels et, de ce fait la divulgation de la spécification détaillée de la fonction non linéaire utilisée peut représenter un risque. En ce qui concerne le second mécanisme, il possède l'avantage de bénéficier d'une sécurité prouvable tant que le nombre d'authentifications n'excède pas un certain seuil, et il n'y a donc pas de risque lié à la divulgation de la fonction linéaire utilisée mais, par contre la nécessité de limiter strictement le nombre d'utilisations de la fonction d'authentification pour la durée de vie de la puce (ou dans le cas de cartes rechargeables, entre deux rechargements) inhérente à cette solution peut représenter une contrainte difficile à satisfaire pour certaines applications. En outre, des attaques portant non pas sur les puces à logique câblée mais, sur les modules de sécurité utilisés pour la vérification de ces puces et, selon lesquelles un fraudeur fournirait à des modules de vérification des réponses aléatoires jusqu'à ce qu'un nombre suffisant de bonnes réponses, obtenues par hasard, lui fournisse le secret associé à un numéro de carte de son choix, peuvent être plus difficiles à contrer dans le cas du second mécanisme. Des combinaisons de ces deux types de mécanismes permettant de cumuler leurs avantages ont fait l'objet des brevets FR 00 03684 et FR 0004313.

Plus précisément, le brevet FR 89 09734 décrit une carte à microcircuit câblé dans laquelle une fonction cryptographique série est appliquée à deux opérandes, dont l'un est un « mot-clé » (par exemple un aléa R fourni par une entité externe à la carte) et l'autre est une « sortie » de la « mémoire interne » de la carte (par exemple une clé secrète K ou une donnée D liée à l'application). La fonction cryptographique série est réalisée par un circuit câblé comprenant un opérateur logique recevant ledit mot-clé et ladite sortie de ladite mémoire interne, suivi d'un circuit logique à retard possédant des moyens à retard et formant boucle entre les sorties et les entrées d'adresses d'une mémoire secrète. La sortie de l'opérateur logique intervient sur les sorties de données de la mémoire secrète pour constituer les nouvelles entrées d'adresses de cette mémoire secrète.

Ce procédé présente plusieurs inconvénients.

Un premier inconvénient vient du fait que le mot-clé et la sortie de la mémoire interne sont combinés selon un simple opérateur logique. Plus précisément, les bits du mot-clé sont utilisés successivement pour constituer le premier opérande de l'opérateur logique et les bits de la sortie de la mémoire interne sont utilisés successivement pour constituer le second opérande de cet opérateur. Par conséquent l'intervention d'un bit donné du mot-clé ou d'un bit donné de la sortie de la mémoire interne sur le circuit logique à retard se limite exclusivement à l'instant où il est présenté en entrée de l'opérateur logique.

Or, la solidité d'une fonction cryptographique repose en partie sur ses qualités de diffusion, et en particulier sur le fait qu'un bit donné d'un paramètre d'entrée de cet algorithme influe sur le plus grand nombre d'étapes possibles de cet algorithme. Ainsi le principe de diffusion est insuffisamment satisfait dans le procédé décrit dans le brevet FR 89 09734, étant donné que chaque bit de chaque opérande influe sur une étape uniquement. Il s'ensuit que des manipulations frauduleuses sur ces opérandes pourraient s'en trouver facilitées. Il s'ensuit aussi que la découverte de bits supposés rester secrets (tels que ceux constituant la clé secrète K) à partir de l'observation d'une ou plusieurs sorties fournies par l'algorithme, pourrait également s'en trouver facilitée.

Un deuxième inconvénient vient du fait que l'opérateur logique du circuit câblé a comme argument d'entrée le mot-clé et la sortie de la mémoire interne ce qui interdit à l'opérateur logique de pouvoir combiner la sortie d'une mémoire interne avec la sortie d'une autre mémoire interne. Par exemple, une clé secrète et une donnée d'application inscrite dans la puce ne peuvent pas être combinées par cet opérateur logique. Il s'ensuit que la modification frauduleuse de données d'application pourrait s'en trouver facilitée.

D'autres inconvénients du procédé décrit dans le brevet FR 89 09734 proviennent de l'utilisation d'un circuit logique à retard possédant des moyens à retard et formant boucle entre les sorties de données et les entrées d'adresses d'une mémoire secrète.

En premier lieu, le fait que la mémoire soit secrète n'est pas toujours indispensable. Bien qu'il existe des attaques contre les algorithmes cryptographiques qui tirent profit de défauts que peuvent présenter de telles mémoires, tels que des défauts liés à leur non-linéarité, et si ces mémoires sont spécifiées de telle sorte à ne pas présenter ces défauts, alors elles peuvent être rendues publiques sans compromettre la sécurité de l'algorithme dans son ensemble. Cependant et bien que cela ne soit pas nécessaire, l'utilisateur peut choisir de les maintenir secrètes afin d'augmenter la sécurité de l'algorithme.

En second lieu, l'utilisation d'un circuit logique à retard formant boucle entre les sorties de données et les entrées d'adresses de la mémoire est très restrictive. Cela exclut en particulier que la sortie du circuit câblé soit de longueur (exprimée en bits) très élevée, car la taille de la mémoire augmente exponentiellement avec cette longueur. Par exemple, si la sortie a une longueur de 4 bits, alors la mémoire occupe 64 bits. Mais si la sortie a une longueur de 8 bits, alors la mémoire occupe 2 Kbit, taille très élevée pour une puce à logique câblée de bas coût. Si la sortie a une longueur de 16 bits, alors la mémoire occupe 1Mbit, taille trop élevée pour n'importe quelle puce à logique câblée. Toutefois la longueur de la sortie du circuit câblé doit être de longueur telle qu'un fraudeur qui essaierait d'en deviner la valeur au hasard n'ait qu'une chance négligeable de réussir. Si la longueur est de 4 bits, le fraudeur a une chance sur 2 à la puissance 4, c'est-à-dire 16, ce qui représente une chance excessive dans presque toutes les applications. Si la longueur est de 8 bits, le fraudeur a une chance sur 256, ce qui reste excessif dans la plupart des applications. Ainsi, le procédé décrit dans le brevet FR 89 09734 ne permet pas de satisfaire simultanément les contraintes techniques d'une puce à logique câblée et les contraintes de sécurité de la plupart des applications.

La demande de brevet FR 2 739 706 décrit un procédé cryptographique de protection contre la fraude d'une puce électronique. Ce procédé consiste à calculer dans la puce électronique un certificat à partir de paramètres d'entrée, à effectuer le changement d'état d'un automate à états finis en le faisant passer d'un état ancien à un état nouveau selon une fonction dépendant au moins de l'état ancien et d'une valeur des paramètres d'entrée, à calculer le certificat au moyen d'une fonction de sortie ayant pour argument d'entrée au moins un état de l'automate.

Résumé de l'invention

La présente invention porte sur un procédé cryptographique de protection contre la fraude d'une puce électronique et sur un dispositif à puce électronique, dans des transactions entre une application et la puce électronique, plus particulièrement adaptés aux puces à logique câblée et plus particulièrement destinés à mettre en place un mécanisme d'authentification, qui soit dépourvu des inconvénients mentionnés ci-dessus, de manière à renforcer la solidité cryptographique du mécanisme d'authentification obtenu, et donc rendre la création de clones plus ardue.

A cette fin le procédé a pour objet un procédé cryptographique de protection contre la fraude d'une puce électronique, dans des transactions entre une application et la puce électronique, consistant à calculer dans la puce électronique un certificat à partir de paramètres d'entrée, ledit procédé consistant en outre :

- à mélanger tout ou partie des paramètres d'entrée au moyen d'une fonction de mélange et à fournir en sortie de la fonction de mélange une donnée $E' = (e'_1, e'_2, \ldots e'_n, \ldots, e'_N)$,
- à effectuer le changement d'état d'un automate à états finis en le faisant passer d'un état ancien à un état nouveau selon une fonction dépendant au moins de l'état ancien et d'une valeur de la suite de bits $(e'_1, e'_2, \ldots e'_n, \ldots, e'_N)$,
- à calculer le certificat au moyen d'une fonction de sortie ayant pour argument d'entrée au moins un état de l'automate.

Et l'invention a en outre pour objet un dispositif à puce électronique permettant la mise en oeuvre d'un procédé cryptographique de protection contre la fraude de la puce électronique, dans des transactions entre une application et la puce électronique, consistant à calculer par la puce électronique un certificat à partir de paramètres d'entrée, ledit dispositif comprenant :

- des moyens de mélange de tout ou partie des paramètres d'entrée pour fournir en sortie une donnée $E' = (e'_1, e'_2, \ldots e'_n, \ldots, e'_N)$ résultat du mélange,
- un automate à états finis qui passe d'un état ancien à un état nouveau selon une fonction dépendant au moins de l'état ancien et d'une valeur de la suite de bits $(e'_1, e'_2, \ldots e'_n, \ldots, e'_N)$,

- un moyen de sortie pour calculer le certificat à partir d'arguments d'entrée comprenant au moins un état de l'automate.

Ainsi le procédé et le dispositif se décomposent en une fonction dite de mélange et en un automate. Les paramètres d'entrée du procédé et du dispositif peuvent, dans le cas de la mise en oeuvre d'un mécanisme d'authentification, être constitués d'une clé secrète K, d'un aléa R, de données d'application D, d'une adresse A, d'un identifiant I, etc.

Les paramètres d'entrée du procédé cryptographique et du dispositif sont traités dans la fonction de mélange qui fournit en sortie une donnée dépendant de tout ou partie des paramètres d'entrée. La donnée de sortie de la fonction de mélange intervient dans le changement d'état de l'automate à états finis, dont au moins un état, préférentiellement l'état final, est utilisé pour calculer la valeur de sortie, appelée certificat S.

Du fait de la fonction de mélange, l'intervention d'un bit donné d'un paramètre d'entrée ne se limite plus exclusivement à l'instant où il est présenté en entrée des moyens de mise en oeuvre du procédé, mais influe au contraire sur un grand nombre d'étapes postérieures à cet instant. Le principe de diffusion se trouve ainsi satisfait.

De manière avantageuse, l'automate permet d'obtenir des certificats de taille élevée (16, 32 voire 64 bits) sans pour autant avoir à stocker un nombre important de bits. En effet, l'automate n'est pas nécessairement constitué d'un simple circuit logique à retard formant boucle entre les sorties de données et les entrées d'adresses d'une mémoire.

Le certificat obtenu par la mise en oeuvre d'un procédé et d'un dispositif selon l'invention peut être utilisé aussi bien pour échanger des clés secrètes entre l'application et la puce, ou chiffrer des données échangées entre l'application et la puce, que pour l'authentification de la puce ou de l'application. Il peut aussi être interprété comme une signature électronique de tout ou partie des paramètres d'entrée. Il peut encore être interprété comme une séquence de bits pseudo-aléatoires et, en faisant varier au moins l'un des paramètres d'entrée, le procédé de calcul du certificat devient alors un procédé de génération de bits pseudo-aléatoires.

Brève description des dessins

D'autres caractéristiques et avantages de l'invention apparaîtront lors de la description qui suit faite en regard de dessins annexés de modes particuliers de réalisation donnés à titre d'exemples non limitatifs.

La figure 1 est un schéma d'un procédé selon l'invention.
La figure 2 est un schéma d'un exemple d'une fonction de mélange.
La figure 3 est un schéma d'un exemple d'un automate à états finis.

La figure 4 est un schéma qui illustre la mise en oeuvre d'un procédé selon l'invention.

Description d'un mode de réalisation

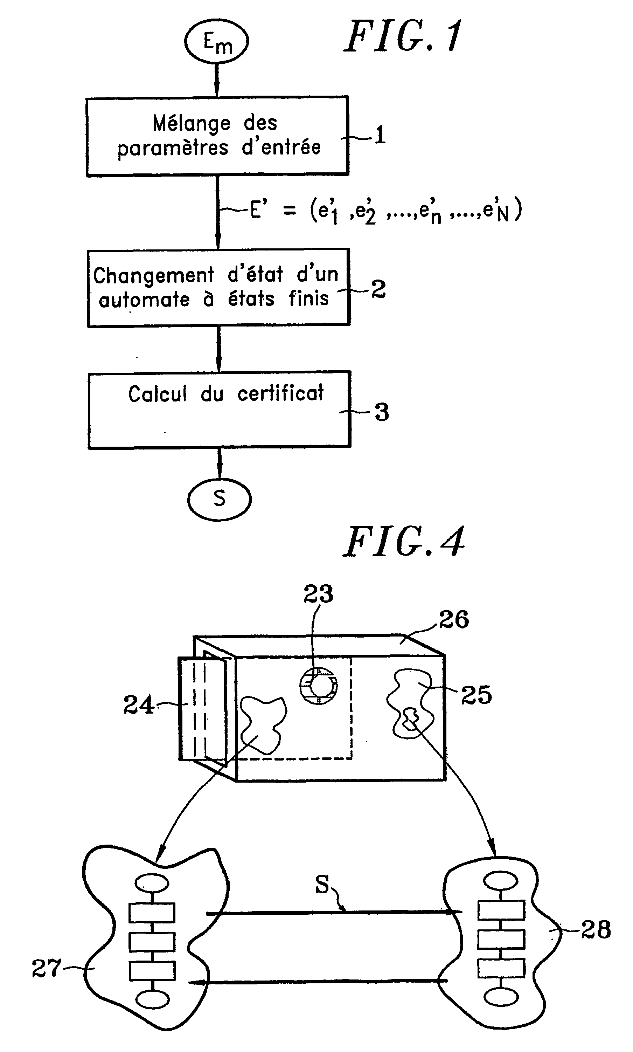

La figure 1 représente schématiquement un procédé selon l'invention de protection d'une puce électronique contre la fraude. Le procédé consiste en différentes fonctions ci-après décrites.

Une première fonction 1 dite de mélange consiste à mélanger tout ou partie des paramètres d'entrée $E_m$ (m=1 à M), avec M égal au nombre de paramètres, et à fournir en sortie une donnée $E' = (e'_1, e'_2, \dots e'_n, \dots, e'_N)$, avec N égal au nombre de bits de la donnée de sortie. Chaque paramètre d'entrée $E_m$ comprend un certain nombre de bits. Les données d'entrée de la fonction de mélange sont constituées de tout ou partie des paramètres d'entrée $E_m$.

Un premier paramètre d'entrée E, peut être constitué d'une clé secrète K, stockée dans une zone protégée de la puce, c'est-à-dire dans une zone mémoire de la puce qu'il ne soit pas possible de lire ni de modifier de l'extérieur. Cette zone mémoire peut par exemple être implantée dans un registre ou dans une mémoire.

Un second paramètre d'entrée $E_2$ peut être constitué de données D internes à la puce, c'est-à-dire stockées dans une mémoire programmable (de type RAM, PROM, EPROM ou encore E2PROM) de la puce. Ces données peuvent être de natures très diverses, et peuvent être inscrites lors de phases très différentes de la vie de la puce, telles que la phase de fabrication de la puce, la phase de fabrication de l'objet (carte, ticket, etc.) dans lequel la puce est insérée, la phase de personnalisation de cet objet par l'entité émettrice, ou encore la phase d'utilisation de l'objet par son détenteur.

Un troisième paramètre d'entrée $E_3$ peut, dans le cas où un paramètre d'entrée est constitué de données D internes à la carte, être constitué de l'adresse ou des adresses de la ou des zone-mémoire(s) de la puce dans laquelle ou lesquelles ces données D sont stockées.

Un quatrième paramètre d'entrée $E_4$ peut être constitué de données D' externes à la puce, fournies à la puce préalablement à la mise en oeuvre du procédé cryptographique, par exemple au début de la transaction avec l'application.

Un cinquième paramètre d'entrée $E_5$ peut être constitué d'un aléa R externe à la puce, fourni à la puce préalablement à la mise en oeuvre du procédé cryptographique par exemple au début de la transaction avec l'application. Cet aléa peut être une valeur aléatoire, c'est-à-dire choisie au hasard, de taille suffisamment élevée pour que la probabilité de choisir deux valeurs égales soit très faible. Il peut aussi être déterminé à partir d'une suite d'entiers consécutifs générés par l'application et la puce électronique. Il peut encore être déterminé à partir de caractéristiques de temps, typiquement la date et l'heure. Enfin, il peut être une combinaison de tout ou partie des éléments pré cités.

Un sixième paramètre d'entrée $E_6$ peut être constitué d'un aléa R' interne à la puce, fourni à la puce préalablement à la mise en oeuvre du procédé cryptographique. Cet aléa peut être déterminé à partir d'une valeur aléatoire, c'est-à-dire choisie au hasard, et de taille suffisamment élevée pour que la probabilité de choisir deux valeurs égales soit très faible. Il peut aussi être déterminé à partir d'une suite d'entiers consécutifs générés par l'extérieur, typiquement l'application, et la puce électronique. Il peut encore être déterminé à partir de caractéristiques de temps, typiquement la date et l'heure. Enfin, il peut être une combinaison de tout ou partie des éléments pré cités.

La liste des paramètres possibles n'est pas exhaustive. L'accroissement du nombre de paramètres permet avantageusement d'augmenter la sécurité du procédé, toutefois cette augmentation est au détriment d'une implantation simple.

Les données d'entrée de la fonction de mélange, déterminées à partir des paramètres d'entrée $E_m$, peuvent être des objets mathématiques de nature quelconque, par exemple des bits, des chaînes de bits de longueur fixe ou variable, des nombres entiers, des nombres non entiers etc. Il en est de même de la donnée de sortie de la fonction de mélange. Cependant, pour la commodité de la description du procédé, nous assimilerons cette sortie à une suite de bits $E' = (e'_1, e'_2, \dots e'_n, \dots, e'_N)$, ce qui n'est pas restrictif en pratique.

La fonction de mélange peut être une fonction linéaire ou non-linéaire des données d'entrée.

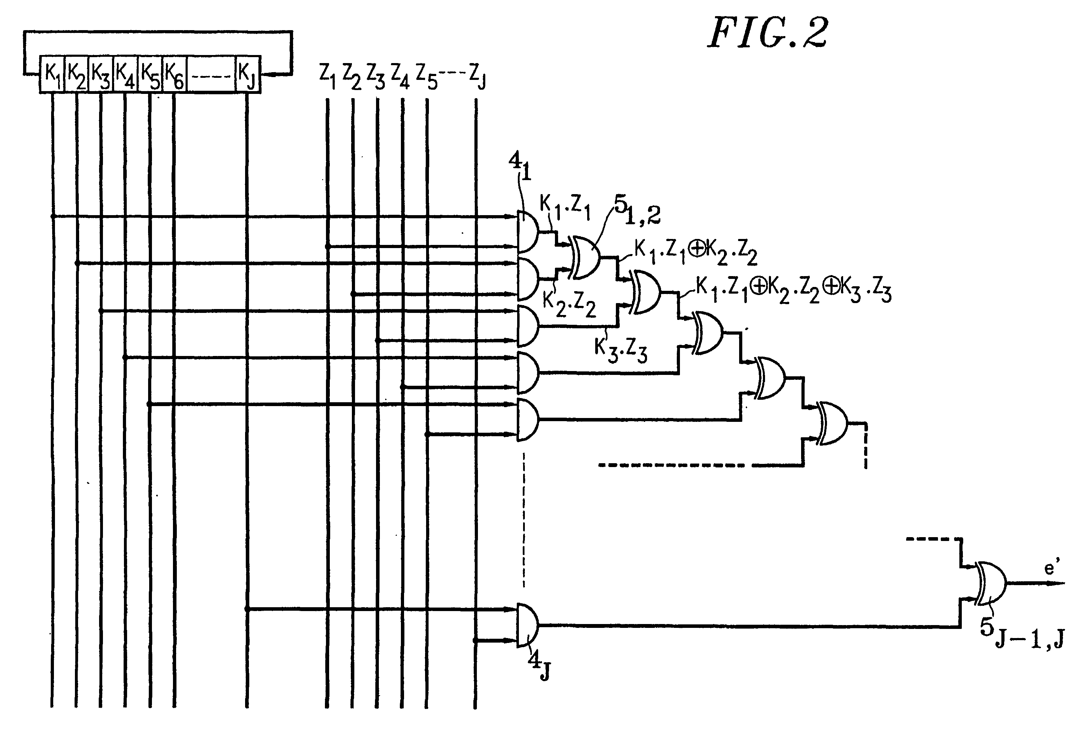

Un premier exemple de fonction 1 linéaire illustré par la figure 2 consiste à effectuer le produit scalaire entre les données d'entrée. En supposant que les données d'entrée sont d'une part une clé K constituée de J bits $(K_1, K_2, \dots, K_J)$, et d'autre part un aléa R et une donnée D qui constituent un ensemble de J bits noté $(Z_1, Z_2, \dots Z_J)$, alors le premier bit de la donnée de sortie de la fonction de mélange peut être défini comme étant le produit scalaire des deux données ci-dessus décrites. Ainsi, le premier bit de la donnée de sortie de la fonction de mélange est égal au résultat d'un OU exclusif portant sur les J bits obtenus en effectuant pour tout j le produit $K_j . Z_j$ avec j=1 à J. Selon l'exemple d'implantation illustré par la figure 2, le produit $K_j . Z_j$ est obtenu en sortie d'une porte $4_j$ logique ET avec j=1 à J. Le OU exclusif, portant sur les J bits obtenus en effectuant pour tout j le produit $K_j . Z_j$, est décomposé en un ensemble de portes $5_{j,j+1}$ OU exclusif avec j=1 à J-1. Chaque porte $5_{j,j+1}$ OU exclusif a deux entrées et une sortie. Au moins une entrée est la sortie d'une porte $4_j$ logique ET, la seconde entrée est soit la sortie d'une porte $5_{j,j+1}$ OU exclusif, soit la sortie d'une porte $4_j$ logique ET. La sortie e' de la porte $5_{J-1,J}$ OU exclusif donne la valeur du premier bit de la donnée de sortie de la fonction MIX.

Pour obtenir le deuxième bit de la donnée de sortie, une opération de rotation, d'une ou plusieurs positions, est effectuée sur la clé K. Cette opération transforme la clé K en une donnée K'. Le deuxième bit de la donnée de sortie de la fonction de mélange peut être défini comme étant le produit scalaire de la donnée K' et de l'ensemble de J bits $(Z_1,Z_2,...Z_J)$. Le deuxième bit est présent en sortie e' de la porte $5_{J-1,J}$ OU exclusif.

Pour obtenir les bits suivants de la donnée de sortie, il faut réitérer, pour chaque bit, les opérations décrites pour l'obtention du deuxième bit.

Beaucoup de variantes sont possibles à partir de la fonction 1 linéaire ainsi définie. En particulier, il est possible d'éviter que les bits de la donnée de sortie ne rentrent dans un cycle de répétition, dû au fait qu'après J rotations la clé K se retrouve dans son état initial. Si I est le nombre de bits de sortie souhaité, alors il est possible d'utiliser une clé K de I+J bits : $(K_1, K_2,...,K_{I+J})$. Le premier bit de la donnée de sortie de la fonction de mélange peut être défini comme étant le produit scalaire des données $(K_1, K_2,...,K_J)$ et $(Z_1,Z_2,...Z_J)$. Le second bit de la donnée de sortie peut être défini comme étant le produit scalaire des données $(K_2, K_3,...,K_{J+1})$ et $(Z_1, Z_2,...Z_J)$. Et ainsi de suite jusqu'au dernier bit de la donnée de sortie qui peut être défini comme étant le produit scalaire des vecteurs $(K_{I+1}, K_{I+2},...,K_{J+1})$ et $(Z_1,Z_2,...Z_J)$.

Cette variante est avantageuse en ce qu'il existe un mode d'implantation qui dispense de relire la clé K à chaque fois qu'un bit de sortie est requis. Ce mode repose sur un calcul parallèle des bits de sortie. Pour cela, il faut disposer de deux registres particuliers de I bits, le premier initialisé avec le vecteur $(K_1, K_2,..., K_I)$ et le second avec le vecteur nul $(0,0,...,0)$. Si $Z_1 = 0$, le contenu du second registre reste nul. Si $Z_1 = 1$, le contenu du premier registre constitue le nouveau contenu du second registre. Dans les deux cas, le nouveau contenu du premier registre est $(K_2, K_3,...,K_{I+1})$. Cette dernière opération est réalisée en effectuant un décalage à gauche d'une position, puis en insérant le nouveau bit $K_{I+1}$. Si $Z_2 = 0$, le contenu du second registre n'est pas modifié. Si $Z_2 = 1$, le nouveau contenu du second registre est le résultat d'un OU exclusif des contenus du premier et du second registres. Dans les deux cas, le nouveau contenu du premier registre est $(K_3, K_4,..., K_{I+2})$, contenu obtenu à l'aide d'un décalage puis de l'insertion du nouveau bit $K_{I+2}$. Et ainsi de suite. Après lecture des J bits $(Z_1,Z_2,...Z_J)$, les I bits de sortie de la fonction de mélange sont définis comme étant les I bits contenus dans le second registre.

Un second exemple d'une fonction 1 linéaire consiste à utiliser un registre à décalage à rétroaction linéaire dans lequel les bits des paramètres d'entrée sont entrés successivement et influent sur l'état initial du registre et/ou sur la valeur des bits de rétroaction. Le terme de registre à décalage à rétroaction linéaire perturbé est parfois utilisé pour désigner un registre dans lequel des données sont injectées en cours de fonctionnement du registre. La valeur de sortie E' peut alors être constituée d'un ou plusieurs bits extraits du contenu de ce registre.

Un exemple d'une fonction 1 non-linéaire consiste à utiliser un registre à décalage à rétroaction non linéaire, dans lequel les bits des paramètres d'entrée sont entrés successivement. La valeur de sortie S' peut être constituée d'un ou plusieurs bits extraits du contenu de ce registre.

Une deuxième fonction 2 consiste à effectuer le changement d'état d'un automate à états finis en le faisant passer d'un état ancien à un état nouveau en prenant en compte au moins l'état ancien et une valeur de la suite de bits $E' = (e'_1,e'_2,...e'_n,...,e'_N)$, valeur qui correspond à un bit ou à plusieurs bits pris parmi l'ensemble des bits de la donnée E'. Selon des modes particuliers de mise en oeuvre, cette fonction peut en outre prendre en compte tout ou partie des paramètres d'entrée $E_m$. L'état initial de l'automate peut être déterminé en fonction de tout ou partie de E' et de $E_m$.

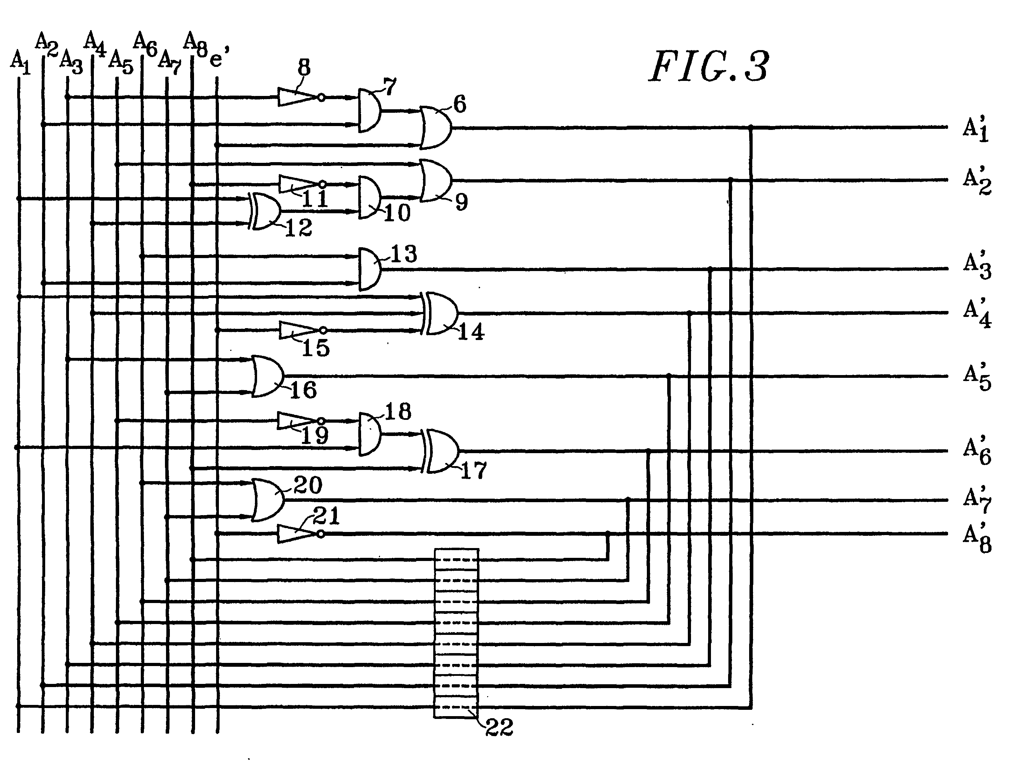

Un premier exemple d'automate, illustré par la figure 3, consiste à utiliser un circuit booléen. C'est-à-dire un circuit qui, par exemple à un vecteur de k+1 bits $(A_1,A_2,...A_{k+1})$ associe un vecteur de k bits $(A'_1,A'_2,...A'_k)$, où chaque bit $A'_i$ est obtenu à partir des bits $(A_1, A_2,...A_{k+1})$ à l'aide d'opérations élémentaires telles que OU exclusif, OU (inclusif), ET, NON et où $(A_1,A_2,...A_k)$ représente l'état ancien de l'automate. Par exemple, dans un cas où k=8, les sorties de l'automate sont données par les relations suivantes dans lesquelles $A_9 = e'$, où e' désigne l'un quelconque des bits de $E' = (e'_1, e'_2,...e'_n,...,e'_N)$:

$A'_1$ = (NON $A_3$) ET $A_2$ OU e' ; $A'_2$ = $A_5$ OU ((NON $A_8$) ET ($A_1$ OU exclusif $A_4$)) ; $A'_3$ = $A_6$ ET $A_2$ ; $A'_4$ = $A_1$ OU exclusif $A_4$ OU exclusif (NON e') ; $A'_5$ = $A_3$ OU $A_7$ ; $A'_6$ = (NON $A_5$) ET $A_1$ OU Exclusif $A_8$ ; $A'_7$ = $A_6$ OU $A_7$ ; $A'_8$ = (NON e'). Selon l'implantation schématisée par la figure 3, $A'_1$ est la sortie d'une porte OU 6 dont une première entrée correspond à e' et une seconde entrée est la sortie d'une porte ET 7. La porte ET 7 a pour première entrée $A_2$ et pour seconde entrée la sortie d'un inverseur 8 dont l'entrée est $A_3$. $A'_2$ est la sortie d'une porte OU 9 dont une première entrée est $A_5$ et dont une seconde entrée est la sortie d'une porte ET 10. La porte ET 10 a pour première entrée la sortie d'un inverseur 11 et pour seconde entrée la sortie d'une porte OU exclusif 12. L'entrée de l'inverseur 11 est $A_8$. La porte OU exclusif 12 a pour première entrée $A_1$ et pour seconde entrée $A_4$. $A'_3$ est la sortie d'une porte ET 13 dont une première entrée est $A_6$ et une seconde entrée est $A_2$. $A'_4$ est la sortie d'une porte OU exclusif 14 dont une première entrée est $A_1$, une deuxième entrée est $A_4$ et une troisième entrée est la sortie d'un inverseur 15 dont l'entrée est e'. $A'_5$ est la sortie d'une porte OU 16 dont une première entrée est $A_3$ et dont la seconde entrée est $A_7$. $A'_6$ est la sortie d'une porte OU exclusif 17 dont une première entrée est $A_8$ et dont une seconde entrée est la sortie d'une porte ET 18. La porte ET 18 a pour première entrée $A_1$ et pour seconde entrée la sortie d'un inverseur 19 dont l'entrée est $A_5$. $A'_7$ est la sortie d'une porte OU 20 dont une première entrée est $A_6$ et une seconde entrée est $A_7$. $A'_8$ est la sortie d'un inverseur 21 dont l'entrée est e'. Chaque bit Ap est la sortie d'une bascule dont l'entrée est le bit $A_p'$, avec p=1 à k.

Selon l'exemple, l'automate possède un état interne de k bits $(A_1,A_2,...A_k)$ et présente en sortie un nouvel état $(A'_1,A'_2,...A'_k)$, à chaque fois qu'un nouveau vecteur $(A_1,A_2,...A_k, e')$ est présent en entrée du circuit booléen, le nouveau vecteur étant constitué de l'état interne et de la sortie de la fonction de mélange.

Un second exemple d'automate consiste à utiliser des transformations de bits définies par des tableaux de nombres. Toujours dans le cas k=8, il est par exemple possible de diviser l'octet $(A_1,A_2,...A_8)$ en deux quartets $(A_1,A_2,A_3,A_4)$ et $(A_5,A_6,A_7,A_8)$, puis d'appliquer à chaque quartet une transformation T si le bit de sortie e' vaut zéro, ou une transformation U si e' vaut un. La transformation T est définie par un tableau qui associe à chaque valeur de quartet (a,b,c,d) une valeur de quartet (a',b',c',d'). De même pour U.

Lorsque toutes les valeurs d'entrée ont été prises en compte, l'automate est dans un certain état final $(F_1,F_2,...F_k)$.

Une troisième fonction 3, dite de sortie, ayant pour arguments d'entrée au moins un état de l'automate, consiste à calculer un certificat S. L'implantation la plus simple est obtenue en prenant en compte uniquement l'état final de l'automate. Toutefois, la fonction peut prendre en compte de manière complémentaire des états antérieurs de l'automate. Préférentiellement, la fonction de sortie est la fonction identité appliquée à l'état final de l'automate. En d'autres termes, le certificat S est égal à la donnée de k bits $(F_1,F_2,...F_k)$. Selon un autre mode de réalisation, la fonction de sortie est une fonction de troncature. Le certificat S peut être vérifié par toute application ayant connaissance de la clé secrète K de la puce. Pour cela, toutes les données non connues de l'application mais entrant dans le calcul du certificat, par exemple des données internes à la puce, doivent être communiquées par la puce à l'application, préalablement, simultanément ou postérieurement à l'envoi du certificat. L'application met en oeuvre exactement le même procédé cryptographique que celui mis en oeuvre par la puce en utilisant les mêmes données d'entrée que celles utilisées par la puce, et obtient un certificat S'. L'application compare le certificat S' qu'elle a calculé à celui S calculé par la puce. S'il y a égalité, la puce est considérée comme authentique par l'application. La vérification du certificat calculé par l'application peut être effectuée par ailleurs par la puce pour permettre à cette dernière d'authentifier l'application.

La figure 4 permet d'illustrer la mise en oeuvre d'un procédé selon l'invention, lors d'une transaction entre une puce électronique et une application.

La puce 23 électronique est hébergée par un support 24 qui consiste par exemple en une carte prépayée, en un ticket électronique, en une carte bancaire, etc.

L'application 25 se déroule en totalité ou en partie dans un lecteur 26 de puce électronique. Ce lecteur peut être un lecteur sans contact ou un lecteur avec contact comme illustré par la figure 4.

Lorsque l'application consiste en une application d'authentification, la seule présence de la carte dans le lecteur peut activer ce lecteur et déclencher l'application. L'application sollicite la puce pour que cette dernière s'authentifie en lui fournissant un certificat S calculé 27 selon un procédé selon l'invention. En parallèle, l'application calcule 28 selon le même procédé un certificat à partir des mêmes paramètres d'entrée que la puce. A l'issue du calcul, la puce fournit son résultat à l'application qui le compare avec son propre résultat. Lorsque les résultats sont identiques, l'authentification de la puce est correcte et l'application en informe la puce. Les paramètres d'entrée peuvent être déterminés de manière définitive avant toute utilisation de la puce électronique, implantée dans la puce et connue de l'application. Ils peuvent éventuellement être réactualisés après authentification de la carte selon un processus déterminé. La réactualisation peut concerner la totalité des paramètres ou seulement certains d'entre eux ou encore l'application peut fournir un nouveau paramètre comme un aléa R déterminé de manière aléatoire ou déterminé par la valeur d'un compteur, d'une horloge, d'une date, etc...

**Revendications**

1. Procédé cryptographique de protection contre la fraude d'une puce (23) électronique, dans des transactions entre une application (25) et la puce électronique, consistant à calculer dans la puce électronique un certificat (S) à partir de paramètres d'entrée ($E_m$), comprenant les étapes qui consistent :

   - à effectuer (2) le changement d'état d'un automate à états finis en le faisant passer d'un état ancien à un état nouveau selon une fonction dépendant au moins de l'état ancien et d'une valeur d'une suite de bits $E' = (e'_1, e'_2, ...e'_n, ..., e'_N)$,
   - à calculer (3) le certificat (S) au moyen d'une fonction de sortie ayant pour argument d'entrée au moins un état de l'automate,

   **caractérisé en ce que** le procédé comprend en outre l'étape qui consiste :

   - à mélanger (1) tout ou partie des paramètres d'entrée ($E_m$) au moyen d'une fonction de mélange et à fournir en sortie de la fonction de mélange une donnée $E' = (e'_1, e'_2, ... e'_n, ..., e'_N)$, le mélange étant effectué au moyen d'au moins un registre à décalage à rétroaction, dans lequel les bits des paramètres d'entrée qui sont mélangés comprennent au moins des bits d'une clé secrète K, stockée dans une zone-mémoire protégée de la puce (23), sont entrés successivement et influent sur l'initialisation du registre et/ou sur la valeur des bits de rétroaction, pour fournir en sortie du registre la donnée $E' = (e'_1, e'_2, ... e'_n, ..., e'_N)$ résultat du mélange.

2. Procédé selon la revendication 1, dans lequel la fonction de sortie est la fonction identité ayant pour argument d'entrée l'état nouveau de l'automate.

3. Procédé selon la revendication 1, dans lequel la fonction de sortie est une fonction de troncature ayant pour argument d'entrée l'état nouveau de l'automate.

4. Procédé d'authentification de la puce par l'application selon la revendication 1, dans lequel l'application (25) compare le certificat (S) calculé (27) par la puce électronique à un certificat (S') qu'elle calcule (28) de la même manière que la puce (23) électronique.

5. Procédé d'authentification de l'application par la puce selon la revendication 1, dans lequel la puce électronique (23) compare le certificat (S) qu'elle calcule (27) à un certificat (S') calculé (28) de la même manière par l'application (25).

6. Utilisation d'un certificat à des fins d'échange de clé secrète entre une puce et une application **caractérisée en ce que** le certificat est obtenu par la mise en oeuvre d'un procédé selon l'une des revendications 1 à 5.

7. Utilisation d'un certificat à des fins de chiffrement entre une puce et une application **caractérisée en ce que** le certificat est obtenu par la mise en oeuvre d'un procédé selon l'une des revendications 1 à 5.

8. Utilisation d'un certificat à des fins de signature électronique de tout ou partie de paramètres d'entrée ($E_m$) **caractérisée en ce que** le certificat est obtenu par la mise en oeuvre d'un procédé prenant en compte les paramètres d'entrée ($E_m$) selon l'une des revendications 1 à 5.

9. Utilisation d'un certificat comme séquence de bits pseudo-aléatoires **caractérisée en ce que** le certificat est obtenu par la mise en oeuvre d'un procédé selon l'une des revendications 1 à 5.

10. Dispositif (24) à puce (23) électronique permettant la mise en oeuvre d'un procédé cryptographique de protection contre la fraude de la puce électronique, dans des transactions entre une application (25) et la puce électronique, consistant à calculer (27) dans la puce électronique un certificat (S) à partir de paramètres d'entrée ($E_m$), comprenant :

   - un automate à états finis qui passe d'un état ancien à un état nouveau selon une fonction dépendant au moins de l'état ancien et d'une valeur de la suite de bits $(e'_1, e'_2, ... e'_n, ..., e'_N)$,
   - un moyen de sortie pour calculer le certificat (S) à partir d'arguments d'entrée comprenant au moins un état de l'automate,

   **caractérisé en ce qu'**il comprend en outre :

   - des moyens de mélange de tout ou partie des paramètres d'entrée ($E_m$) pour fournir en sortie une donnée $E' = (e'_1, e'_2, ... e'_n, ..., e'_N)$, les moyens de mélange comprenant au moins un registre à décalage à rétroaction, dans lequel les bits des paramètres d'entrée, qui comprennent au moins des bits d'une clé secrète K, stockée dans une zone-mémoire protégée de la puce (23), sont entrés successivement et influent sur l'initialisation du registre et/ou sur la valeur des bits de rétroaction, pour fournir en sortie du registre la donnée $E' = (e'_1, e'_2, ... e'_n, ..., e'_N)$ résultat du mélange.

11. Dispositif (24) à puce électronique selon la revendication 10, dans lequel le registre à décalage est à rétroaction non linéaire.

12. Dispositif (24) à puce électronique selon la revendication 10, dans lequel le registre à décalage est à rétroaction linéaire.

13. Dispositif (24) à puce selon la revendication 10, dans lequel l'automate comprend un circuit booléen.

14. Dispositif (24) à puce selon la revendication 10, dans lequel l'automate comprend un circuit formant boucle entre les sorties et les entrées d'adresses d'une ou plusieurs mémoires.

15. Carte prépayée comportant un dispositif à puce électronique selon l'une des revendications 10 à 14.

16. Ticket comportant un dispositif à puce électronique selon l'une des revendications 10 à 14.

17. Borne d'accès à un service public comportant un dispositif selon l'une des revendications 10 à 14.

18. Terminal de paiement électronique comportant un dispositif selon l'une des revendications 10 à 14.

**Patentansprüche**

1. In der Berechnung eines Zertifikats (S) im elektronischen Chip ausgehend von Eingangsparametern ($E_m$) bestehendes kryptographisches Schutzverfahren gegen den Missbrauch eines elektronischen Chips (23) bei Transaktionen zwischen einer Anwendung (25) und dem elektronischen Chip, mit den Stufen, die Folgendes umfassen:

   - Durchführung (2) der Zustandsänderung eines Automaten mit Endzuständen, indem er gemäß einer wenigstens vom alten Zustand und einem Wert einer Folge von Bits $E' = (e'_1, e'_2, ... e'_n, ..., e'_N)$ abhängenden Funktion von einem alten Zustand in einen neuen Zustand gebracht wird,
   - Berechnung (3) des Zertifikats (S) mittels einer Ausgangsfunktion mit wenigstens einem Zustand des Automaten als Eingangsargument,

   **dadurch gekennzeichnet, dass** das Verfahren darüber hinaus die Stufe umfasst, die in Folgendem besteht:

   - Mischen (1) aller oder einiger Eingangsparameter ($E_m$) mittels einer Mischfunktion und Lieferung einer Information $E' = (e'_1, e'_2, ... e'_n, ..., e'_N)$ am Ausgang der Mischfunktion, wobei die Mischung mittels wenigstens eines Registers mit Rückwirkungs-Verschiebung durchgeführt wird, in der die Bits der Eingangsparamter, die gemischt werden, wenigstens Bits eines in einem geschützten Speicherbereich des Chips (23) gespeicherten geheimen Schlüssels K umfassen, sukzessive eingegeben werden und die Initialisierung des Registers und / oder des Wertes der Rückwirkungs-Bits beeinflussen, um am Ausgang des Registers die aus der Mischung resultierende Information $E' = (e'_1, e'_2, ... e'_n, ..., e'_N)$ zu liefern.

2. Verfahren gemäß Anspruch 1, in dem die Ausgangsfunktion die Identitätsfunktion ist, deren Eingangsargument der neue Zustand des Automaten ist.

3. Verfahren gemäß Anspruch 1, in dem die Ausgangsfunktion eine Abbruchfunktion ist, deren Eingangsargument der neue Zustand des Automaten ist.

4. Authentifizierungsverfahren des Chips durch Anwendung gemäß Anspruch 1, in dem die Anwendung (25) das durch den elektronischen Chip berechnete (27) Zertifikat (S) mit einem Zertifikat (S') vergleicht, das sie auf dieselbe Weise berechnet (28) wie der elektronische Chip (23).

5. Authentifizierungsverfahren der Anwendung durch den Chip gemäß Anspruch 1, in dem der elektronische Chip (23) das Zertifikat (S), dass er berechnet (27) mit einem von der Anwendung (25) auf dieselbe Weise berechneten (28) Zertifikat (S') vergleicht.

6. Einsatz eines Zertifikats zum Zwecke des Austauschs des geheimen Schlüssels zwischen einem Chip und einer Anwendung, **dadurch gekennzeichnet, dass** das Zertifikat durch Umsetzung eines Verfahrens gemäß Anspruch 1 bis 5 erhalten wird.

7. Einsatz eines Zertifikats zu Chiffrierungszwecken zwischen einem Chip und einer Anwendung, **dadurch gekennzeichnet, dass** das Zertifikat durch Umsetzung eines Verfahrens gemäß Anspruch 1 bis 5 erhalten wird.

8. Einsatz eines Zertifikats zum Zwecke der elektronischen Unterschrift aller oder einiger Eingangsparamter ($E_m$), **dadurch gekennzeichnet, dass** das Zertifikat durch Umsetzung eines die Eingangsparamter ($E_m$) berücksichtigenden Verfahrens gemäß Anspruch 1 bis 5 erhalten wird.

9. Einsatz eines Zertifikats als pseudo-zufällige Bitsequenz, **dadurch gekennzeichnet, dass** das Zertifikat durch Umsetzung eines Verfahrens gemäß Anspruch 1 bis 5 erhalten wird.

10. Die Umsetzung eines kyptographischen Schutzverfahrens gegen den Missbrauch eines elektronischen Chips bei Transaktionen zwischen einer Anwendung (25) und dem elektronischen Chip erlaubende und in der Berechnung (27) eines Zertifikats (S) im elektronischen Chip ausgehend von Eingangsparametern ($E_m$) bestehendes Vorrichtung (24) mit einem elektronischen Chip (23), die Folgendes umfasst:

    - einen Automaten mit Endzuständen, der gemäß einer von wenigstens dem alten Zustand und einem Wert der Bitfolge $(e'_1, e'_2, ... e'_n, ..., e'_N)$ abhängenden Funktion von einem alten Zustand in einen neuen Zustand übergeht,
    - ein Ausgangsmittel zur Berechnung des Zertifikats (S) ausgehend von Eingangsargumenten mit wenigstens einem Zustand des Automaten,

    **dadurch gekennzeichnet, dass** sie darüber hinaus Folgendes umfasst:

    - Mischmittel aller oder einiger Eingangsparameter ($E_m$) zur Lieferung einer Information $E' = (e'_1, e'_2, ... e'_n, ..., e'_N)$ am Ausgang, wobei die Mischmittel wenigstens ein Register mit Rückwirkungs-Verschiebung umfassen, in dem die Bits der Eingangsparameter, die wenigstens die Bits eines in einem geschützten Speicherbereich des Chips (23) gespeichert geheimen Schlüssels K umfassen, sukzessive eingegeben werden und die Initiatilisierung des Registers und / oder des Wertes der Bits mit Rückwirkung beeinflussen, um am Ausgang des Registers die Information $E' = (e'_1, e'_2, ... e'_n, ..., e'_N)$ als Ergebnis der Mischung zu liefern.

**11.** Vorrichtung (24) mit elektronischem Chip gemäß Anspruch 10, in der das Register mit Verschiebung eine nicht lineare Rückwirkung hat.

**12.** Vorrichtung (24) mit elektronischem Chip gemäß Anspruch 10, in dem das Register mit Verschiebung eine lineare Rückwirkung hat.

**13.** Vorrichtung (24) mit Chip gemäß Anspruch 10, in der der Automat einen booleschen Schaltkreis umfasst.

**14.** Vorrichtung (24) mit Chip gemäß Anspruch 10, in dem der Automat einen eine Schleife zwischen den Adress-Ausgängen und den -Eingängen eines oder mehrer Speicher bildenden Schaltkreises umfasst.

**15.** Vorbezahlte Karte mit einer Vorrichtung mit elektronischem Chip gemäß Anspruch 10 bis 14.

**16.** Ticket mit einer Vorrichtung mit elektronischem Chip gemäß Anspruch 10 bis 14.

**17.** Zugangssäule zu einem öffentlichen Dienst mit einer Vorrichtung gemäß Anspruch 10 bis 14.

**18.** Elektronisches Zahlungsterminal mit einer Vorrichtung gemäß Anspruch 10 bis 14.

**Claims**

**1.** A cryptographic method of protecting an electronic chip (23) against fraud in transactions between an application (25) and the electronic chip, the method including calculating a certificate (S) from input parameters ($E_m$) in the electronic chip, the method including the steps consisting in:

- changing (2) the state of a finite state automaton from an old state to a new state in accordance with a function dependent on at least the old state and a value from a series of bits $E' = (e'_1, e'_2, ..., e'_n, ..., e'_N)$, and

- calculating (3) the certificate (S) by means of an output function having at least one state of the automaton as an input argument,

the method being **characterized in that** it further includes the step consisting in:

- mixing (1) some or all of the input parameters ($E_m$) by means of a mixing function and supplying a mixing function output data item $E' = (e'_1, e'_2, ..., e'_n, ..., e'_N)$, mixing being performed by means of at least one feedback shift register in which the bits of the input parameters that are mixed include at least bits of a secret key K stored in a protected memory area of the chip (23), which bits are entered into the shift register successively and influence the initialization of the register and/or the value of the feedback bits to supply at the register output the data item $E' = (e'_1, e'_2, ..., e'_n, ..., e'_N)$ resulting from said mixing.

**2.** A method according to claim 1, wherein the output function is an identity function having the new state of the automaton as an input argument.

**3.** A method according to claim 1, wherein the output function is a truncation function having the new state of the automaton as an input argument.

**4.** A method according to claim 1 applied to authentication of the chip by the application, wherein the application (25) compares the certificate (S) calculated (27) by the electronic chip to a certificate (S') that it calculates (28) in the same way as the electronic chip (23).

**5.** A method according to claim 1 applied to authentication of the application by the chip, wherein the electronic chip (23) compares the certificate (S) that it calculates (27) to a certificate (S') calculated (28) in the same way by the application (25).

**6.** Use of a certificate to exchange a secret key between a chip and an application, **characterized in that** the certificate is obtained by a method according to any one of claims 1 to 5.

**7.** Use of a certificate for encryption by a chip and an application, **characterized in that** the certificate is obtained by a method according to any one of claims 1 to 5.

**8.** Use of a certificate for electronically signing some or all input parameters ($E_m$), **characterized in that** the certificate is obtained by a method taking into account the input parameters ($E_m$) according to any one of claims 1 to 5.

9. Use of a certificate as a sequence of pseudorandom bits, **characterized in that** the certificate is obtained by a method according to any one of claims 1 to 5.

10. A device (24) including an electronic chip (23) and means for executing a cryptographic method of protecting the electronic chip against fraud in transactions between an application (25) and the electronic chip by calculating (27) a certificate (S) from input parameters ($E_m$) in the electronic chip, the device comprising:

   - a finite state automaton that changes from an old state to a new state in accordance with a function depending at least on the old state and a value from the series of bits ($e'_1, e'_2, ..., e'_n, ..., e'_N$), and
   - output means for calculating the certificate (S) from input arguments including at least one state of the automaton,

   the device being **characterized in that** it further comprises:

   - mixing means for mixing some or all of the input parameters ($E_m$) to supply an output data item $E' = (e'_1, e'_2, ..., e'_n, ..., e'_N)$, the mixing means include at least one feedback shift register into which the bits of the input parameters, which include at least bits of a secret key K stored in a protected memory area of the chip (23), are entered successively and influence the initialization of the register and/or the value of the feedback bits to supply at the register output the data item $E' = (e'_1, e'_2, ..., e'_n, ..., e'_N)$ resulting from said mixing.

11. An electronic-chip device (24) according to claim 10, in which the shift register is a nonlinear feedback shift register.

12. An electronic-chip device (24) according to claim 10, in which the shift register is a linear feedback shift register.

13. A device (24) according to claim 10, wherein the automaton includes a Boolean circuit.

14. A device (24) according to claim 10, wherein the automaton includes a loop circuit between the outputs and the address inputs of one or more memories.

15. A prepaid card including a device according to any one of claims 10 to 14.

16. A ticket including a device according to any one of claims 10 to 14.

17. An access terminal to a public service, including a device according to any one of claims 10 to 14.

18. An electronic payment terminal including a device according to any one of claims 10 to 14.

*FIG.1*

$E_m$

| Mélange des paramètres d'entrée | 1 |

$E' = (e'_1, e'_2, ..., e'_n, ..., e'_N)$

| Changement d'état d'un automate à états finis | 2 |

| Calcul du certificat | 3 |

S

*FIG.4*

*FIG.2*

$K_1, K_2, K_3, K_4, K_5, K_6 \,----\, K_J$

$Z_1\ Z_2\ Z_3\ Z_4\ Z_5\,---\,Z_J$

$4_1$

$K_1 \cdot Z_1$

$5_{1,2}$

$K_1 \cdot Z_1 \oplus K_2 \cdot Z_2$

$K_2 \cdot Z_2$

$K_1 \cdot Z_1 \oplus K_2 \cdot Z_2 \oplus K_3 \cdot Z_3$

$K_3 \cdot Z_3$

$e'$

$5_{J-1,J}$

$4_J$

EP 1 399 896 B1

FIG.3

EP 1 399 896 B1